# EUROPEAN PATENT APPLICATION

(11) **EP 3 189 811 A1**
(43) Date of publication of application: **12.07.2017**
(21) Application number: 15838460.2
(22) Date of filing: 31.08.2015
(51) Int. Cl.: A61C 17/34

(54) **VERTICALLY BRUSHING TYPE ELECTRIC TOOTHBRUSH**

(30) Priority: 04.09.2014 CN 201410446425
(71) Applicant: Chen, Weilang, Beijing 100025 (CN)
(72) Inventor: Chen, Weilang, Beijing 100025 (CN)
(74) Representative: dompatent von Kreisler Selting Werner - Partnerschaft von Patent- und Rechtsanwälten mbB
(86) International application number: PCT/CN2015/088573
(87) International publication number: WO 2016/034091

(57) **Abstract**

Disclosed is a vertically-brushing type electrical toothbrush, comprising a toothbrush head and a toothbrush handle. The toothbrush head comprises a brush head panel 1, a panel wedge-shaped contact 2, a panel balance positioning round shaft 3, an elastic sheet 4, a toothbrush head cover 5, and a movable positioning hole 6. The toothbrush handle comprises: a power supply 7, a power supply switch 8, a motor 9, a driving rod 10, a spiral head 11, a water-proof rubber pad 12, a toothbrush handle protective housing 13, and a water discharge orifice 14. The motor drives the driving rod to rotate, the spiral head at the front end of the driving rod impinges upon the panel wedge-shaped contact at a high frequency, the brush head panel balance positioning round shaft rotates, the brush head panel is eccentric from the pressed elastic sheet, a counteracting force of the elastic sheet restores the position of the brush head panel, thereby achieving the high-frequency swing of the brush head panel in a direction perpendicular to the brush handle.

## Description

### CROSS-REFERENCE TO THE RELATED APPLICATIONS

The present application claims the benefit of Chinese Patent Application No. 201410446425.5 entitled "Vertically-brushing Type Electrical Toothbrush", filed on September 4, 2014, the entire disclosure of which is incorporated herein by reference.

### Field of the Invention

The present invention relates to a power-driven cleaning device, and particularly to an electrical toothbrush.

### Background of the Invention

Most toothbrushes available in the market require manual operation. As compared with ordinary toothbrushes, electrical toothbrushes are more scientific and efficient. Electrical toothbrushes may more thoroughly clean teeth, remove dental plaque, reduce gingivitis and gum bleeding. Currently, electrical toothbrushes available in the market are mainly electrical teeth with a rotary brush head, and acoustic wave-driven toothbrushes. Electrical toothbrushes for brushing teeth in a vertical manner as recommended by a dentist cannot be found in the market. An electrical toothbrush with a rotary brush head is a toothbrush using a motor to drive a circular brush head to rotate, as can be found in the solution recited in Colgate patent publication CN1438857A. The rotating brush head performs the tooth-brushing action to produce a tooth surface-cleaning effect, and rotation mostly cleans the tooth surface and cannot result in a desirable cleaning effect to the depth of the tooth gap. The patent publication CN1491623A is directed to a gear-driven type toothbrush with a complicated gear arrangement. An acoustic wave-driven toothbrush generate a lot of microbubbles by vibrating liquid in the oral cavity such as water, toothpaste and the like and cleans teeth by virtue of high-pressure impact caused by instant burst of bubbles around teeth. However, bristles on the brush head of the acoustic wave-driven toothbrush are hard, damage dental enamel in long-term use and cause discomfort to a customer group with a sensitive oral cavity.

### Summary of the Invention

The present invention mainly aims to provide a vertically-brushing type electrical toothbrush with a brush head swinging at a high speed in a direction perpendicular to a toothbrush handle, which is closer to a scientific tooth-brushing manner as recommended by a dentist.

The present invention comprises a replaceable toothbrush head and a toothbrush handle. The toothbrush head comprises a brush head panel 1, a panel wedge-shaped contact 2, a panel balance positioning round shaft 3, an elastic sheet 4, a toothbrush head cover 5, and a movable positioning hole 6. The toothbrush handle comprises: a power supply 7, a power supply switch 8, a motor 9, a driving rod 10, a spiral head 11, a water-proof rubber pad 12, a toothbrush handle protective housing 13, and a water discharge orifice 14. The motor 9 drives the driving rod 10 to rotate at a high frequency, the spiral head 11 at the front end of the driving rod impinges upon the panel wedge-shaped contact 2 at a high frequency to generate a downward pressure, the panel balance positioning round shaft 3 on the brush head panel 1 is supported in the movable positioning hole 6 within the toothbrush head cover 5 and rotates downward, the brush head panel 1 is eccentric from the pressed elastic sheet 4 during rotation, and a counteracting force restores the brush head panel 1 to an initial position, thereby achieving the high-frequency swing of the toothbrush head in a direction perpendicular to the brush handle and achieving vertical brushing of teeth.

The vertically-brushing type toothbrush may make a to-and-fro direction of bristles consistent with a direction of tooth gap, can effectively remove dirt on the tooth surface and in the tooth gap, and complies with the scientific tooth-brushing method as recommended by a dentist. The toothbrush head and the toothbrush handle are detachable and replaceable. The toothbrush head is simple in structure, does not contain a circuit and is adapted for washing with water. The brush head panel may be an irregular toothbrush head such as a diamond-shaped brush head, a circular brush head or a square brush head. The toothbrush head structure is adapted for a driving manner such as motor driving or acoustic wave-motor driving.

### Brief Description of Drawings

Fig. 1 is a perspective view of an electrical toothbrush according to the present invention;
Fig. 2 is a brush head-assembling view; and
Fig. 3 is a side perspective view of a brush head.

### Detailed Description of Preferred Embodiments

The present invention will be described below in detail with reference to figures and specific embodiments to make objects, technical solutions and advantages of the present invention more apparent.

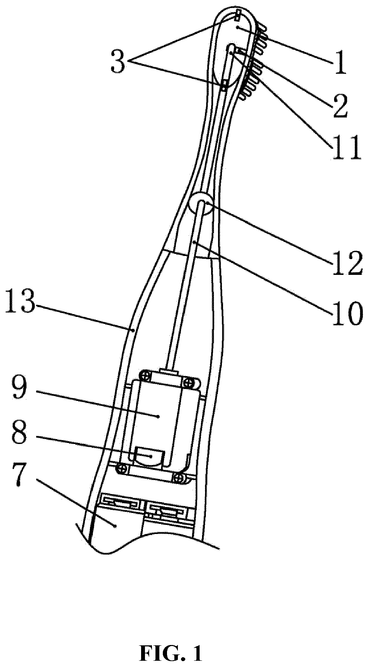

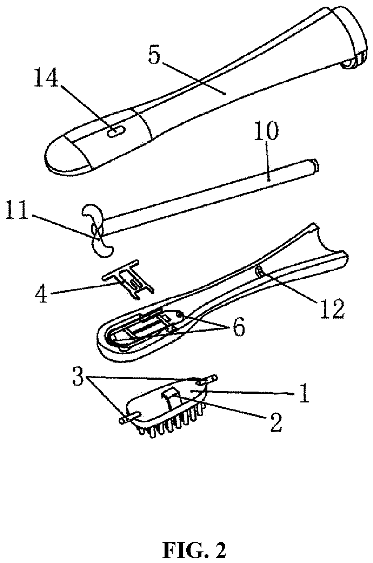

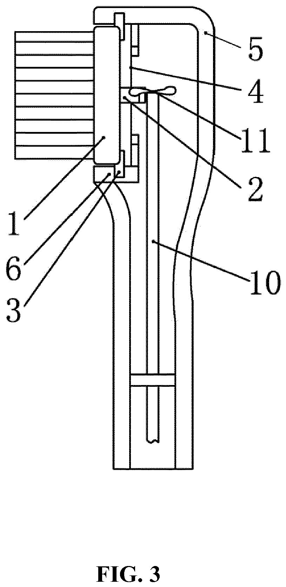

As shown in Fig. 1, a toothbrush handle protective housing 13 contains a power supply 7 and a motor 9. In the toothbrush handle, a battery provides electrical power to the motor. A power supply switch 8 may turn on or turn off the power supply to enable the motor to rotate or stop. The motor is connected with a driving rod to allow the driving rod to rotate. A head of the driving rod 10 is a spiral head 11 structure, and the driving rod may be placed in a hollow portion of the toothbrush head. When the power supply is turned on, the motor 9 drives the driving rod to rotate, the spiral head 11 at the front end of the driving rod, during rotation, repeatedly contacts a panel wedge-shaped contact 2 on the brush head panel at a high frequency. A distal end of the driving rod is mounted with a water-proof rubber pad 12 which is a water-proof structural portion. As shown in Fig. 2, the panel wedge-shaped contact 2 is angled relative to the brush head panel 1 by 45°. The panel wedge-shaped contact 2, a panel balance positioning round shaft 3 and the brush head panel 1 are a unitary structure. A top portion of the panel wedge-shaped contact is an inverted triangular structure, enlarges a contact area and make the brush head panel balanced in mass. The panel wedge-shaped contact 2, impinged upon by the spiral head 11 at the front head of the driving rod, produces an action force with the balance positioning round shaft 3 to rotate eccentrically. The balance positioning round shaft is a central shaft of the mass of the brush head panel and a round shaft portion protruding on both sides of the brush head panel. A movable positioning hole 6 is disposed at a distal end of a front end of an interior of a toothbrush head cover, the brush head panel can be conveniently snap-fitted into the toothbrush head cover to achieve free rotation of the brush head panel in the direction perpendicular to the brush handle. A water discharge orifice 14 is disposed on a top of the toothbrush head cover, and combined with the water-proof rubber pad 12 to form a water discharging and preventing structure. The brush head panel may be an irregular panel structure such as a diamond-shaped brush head, a circular brush head or a square brush head. As shown in Fig. 3, a slot for fixing an elastic sheet is disposed in the interior of the brush head cover, a distal end of the an elastic sheet 4 is fixed to the toothbrush head cover, and a middle portion of the elastic sheet is a deformed supporting structure relative to the toothbrush head cover. The elastic sheet 4 closely abuts against an upper surface of the brush head panel 1 to provide a deformation restoration acting fore. The brush head panel 1 rotates eccentric from an end of the pressed elastic sheet, and the elastic sheet 4 restores the brush head panel 1 to an initial position. The toothbrush head cover is slightly larger than the brush head panel 1, and there is a gap therebetween without affecting the swing of the brush head panel in a direction perpendicular to the brush handle. The movable positioning hole 6 is disposed at a distal end of a front end of an interior of the toothbrush head cover 5, and the hole is slightly larger than the balance positioning round shaft 3 so that the balance positioning round shaft 3 can be snap-fitted into the movable positioning hole 6 of the toothbrush head cover and rotate freely. The spiral head 11 at the front end of the driving rod impinges the brush head panel wedge-shaped contact 2 at a high frequency, the balance positioning round shaft 3 rotates, the brush head panel 1 is eccentric from the pressed elastic sheet 4, the elastic sheet 4 counteracts to restore the position of the brush head panel 1, thereby achieving the high-frequency swing of the brush head panel in a direction perpendicular to the brush handle.

What are described above are only preferred embodiments of the present invention, not intended to limit the invention. Any modifications, equivalent replacements, improvements and the like made within the spirit and principles of the present invention, should all be included in the scope of protection of the present invention.

## Claims

1. A vertically-brushing type electrical toothbrush, wherein a brush head panel swings repeatedly in a direction perpendicular to a brush handle at a high frequency, a motor drives a driving rod to rotate at a high frequency, a spiral head at a front end of the driving rod impinges upon a brush head panel wedge-shaped contact at a high frequency to generate a downward pressure, a panel balancing positioning round shaft on the brush head panel is supported in a movable positioning hole within a toothbrush head cover and capable of rotating downward, the brush head panel is eccentric from a pressed elastic sheet during rotation, a counteracting force exerted by the elastic sheet to the brush head panel restores the brush head panel to an initial position, thereby achieving the high-frequency swing of the brush head panel in a direction perpendicular to the brush handle.

2. The vertically-brushing type electrical toothbrush according to claim 1, wherein the brush head panel balance positioning round shaft is snap-fitted into the movable positioning hole of the toothbrush head cover and is rotatable in a direction perpendicular to the brush handle, the panel balance positioning round shaft is a mass central shaft, and the brush head panel, being pressed, rotates in a direction perpendicular to the brush handle.

3. The vertically-brushing type electrical toothbrush according to claim 1, wherein a distal end of an elastic sheet on the toothbrush head cover is fixed to the brush head cover, a middle portion of the elastic sheet is a deformed supporting structure, the brush head panel rotates eccentric from an end of the pressed elastic sheet, the middle portion of the elastic sheet deforms to support to restore the brush head panel to an initial position.

4. The vertically-brushing type electrical toothbrush according to claim 1, wherein the moveable positioning hole is disposed at both ends of an interior of the toothbrush head cover, the balance positioning round shaft on the brush head panel is snap-fitted into the movable positioning holes in the toothbrush head cover and capable of rotating, there is a gap between the toothbrush head cover and the brush head panel, and a slot for fixing the elastic sheet is disposed in the interior of the toothbrush head cover.
